# EUROPÄISCHE PATENTSCHRIFT

(11) **EP 1 031 269 B1**
(45) Veröffentlichungstag und Bekanntmachung des Hinweises auf die Patenterteilung: **19.10.2005**
(21) Anmeldenummer: 00103095.6
(22) Anmeldetag: 16.02.2000
(51) Int. Cl.: A01D 78/10

(54) **Heuwerbungsmachine**
Haymaking machine
Machine de fenaison

(30) Priorität: 27.02.1999 DE 29903553 U
(43) Veröffentlichungstag der Anmeldung: 30.08.2000
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 0 642 733
- EP-A- 0 772 969
- AT-B- 365 883
- DE-A- 1 932 229
- DE-U- 8 901 611
- DE-U- 29 820 227

## Beschreibung

Die Erfindung betrifft eine Heuwerbungsmaschine, insbesondere eine Schwadmaschine zum Schwaden von landwirtschaftlichem Erntegut nach dem Oberbegriff des Anspruches 1. Derartige Heuwerbungsmaschinen sind aus der Praxis in vielfältigen Ausführungsformen bekannt, siehe beispielsweise DE 29 820 227 U1.

In der DE 196 18 839 A1 ist ein Doppelkreiselschwader offenbart, dessen Arbeitskreisel derart an Hubarmen gehaltert sind, daß die Arbeitskreisel unabhängig voneinander Pendelbewegungen um eine erste und eine zweite Pendelachse durchführen können. Bei der ersten Pendelachse handelt es sich um eine parallel zur Fahrtrichtung des Doppelkreiselschwaders verlaufenden Achse, während die zweite Pendelachse quer zur Fahrtrichtung des Doppelkreiselschwaders ausgerichtet ist. Zur Abstützung der Arbeitskreisel gegenüber dem Erdboden bzw. zur exakten Abtastung von Bodenunebenheiten sind Tasträder vorgesehen, welche bedingt durch die Anbringung unterhalb der Arbeitskreisel innerhalb der Umlaufbahn der inneren Kreiselzinken nur relativ kleine Abstände zueinander aufweisen. Dadurch sind insbesondere bei hohen Arbeitsgeschwindigkeiten und Bodenwellen oder dgl. Bodenunebenheiten Beeinträchtigungen in der Arbeitsqualität nicht zu vermeiden, da bedingt durch die zu geringen Abstände zwischen den Tasträdern sowohl in als auch quer zur Fahrtrichtung unter derartigen Betriebsverhältnissen eine exakte Führung der Tasträder auf der Bodenoberfläche nicht möglich ist.

In der EP 0 642 733 A1 ist ein Doppelkreiselschwader mit zwei, beidseitig seiner vertikalen Längsmittelebene angeordneten Kreiselsystemen beschrieben, welche bedingt durch ihre Aufhängung eine Pendelbewegungen um jeweils eine quer und eine parallel zur vertikalen Längsmittelebene des Doppelkreiselschwaders ausgerichtete Achse ausführen können. Um eine bessere Anpassung der Kreiselsysteme an das Gelände bei quer zur Fahrtrichtung auftretenden Bodenwellen bzw. Bodenunebenheiten zu erreichen, wird in dieser Schrift vorgeschlagen, jeweils vor den Kreiselsystemen ein Stützrad anzuordnen, welches die Geländeoberfläche abtastet. Eine optimale Bodenabtastung jedoch kann nur dann erfolgen, wenn das Stützrad an der Stelle die Geländeoberfläche abtastet, die zuerst mit einer Bodenwelle in Berührung kommt, nämlich der in Bezug zur Fahrtrichtung vordere Teil der Umlaufbahn des äußeren Zinken. Ein dort angeordnetes Stützrad behindert jedoch eine saubere Recharbeit dadurch, daß Halm- bzw.Blattgut von dem vorlaufenden Stützrad auf dem Boden festgehalten wird und somit auf der Feld- oder Wiesenfläche liegen bleibt. Ebenso ist es nicht vermeidbar, daß beim Überfahren einer größeren Erntegutansammlung (Haufen) durch das vordere Stützrad die sich in der Rechstellung befindlichen Zinken kurzzeitig soweit vom Erdboden abgehoben werden, daß ebenfalls Erntegut auf der Feld- und Wiesenfläche liegen bleibt. Weiterhin wird durch das vorlaufende Stützrad die seitliche Förderung (Fließen) des Halm- bzw. Blattgutes entlang der Umlaufbahn der äußeren Zinken erschwert.

Aus der CH-PS 499 254 ist eine Heuwerbungsmaschine bekannt, die im wesentlichen ein vorderes Rechenrad und ein über einen Ausleger mit dem vorderen Rechenrad verbundenes hinteres Rechenrad umfaßt, wobei das hintere Rechenrad je nach vorgesehener Arbeitsweise in Bezug zum vorderen Rechenrad seitlich versetzbar ist. Zur Abstützung beider Rechenräder ist jeweils eine Stützrolle vorgesehen, die in etwa mittig unter den Rechenrädern angebracht ist. Am hinteren Rechenrad ist zusätzlich eine Nachlaufrolle vorgesehen, welche bezüglich der Fahrtrichtung hinter dem Rechenrad angeordnet ist und über ein unter den Rechenzinken hindurch geführtes Glied mit der unter dem Rechenrad befindlichen Konsole der Stützrolle verbunden ist. Dadurch daß die beiden Rechenräder der vorstehend beschriebenen Heuwerbungsmaschine nur zur Überführung aus der Transportstellung (beide Rechenräder laufen hintereinander) in die Arbeitsstellung (das hintere Rechenrad ist seitlich versetzt zum vorderen Rechenrad angeordnet) und zurück relativ zueinander um vertikale Achsen verschwenkt werden können, ist ein exakte Abtastung der Bodenoberfläche eines jeden einzelnen Rechenrades überhaupt nicht möglich. Das bedeutet, beim Überfahren einer Bodenunebenheit durch die Stützrolle eines Rechenrades erfolgt immer auch eine Beeinträchtigung des Fahrverhaltens und somit der Arbeitsqualität des jeweils anderen Rechenrades. Ein weiterer Mangel dieser Heuwerbungsmaschine ergibt sich aus der Tatsache, daß durch die Zuordnung von Stütz- und Nachlaufrolle zu einer Fahrspur eine Anpassung der einzelnen Rechenräder an quer zur Fahrtrichtung auftretenden Bodenunebenheiten überhaupt nicht vorgesehen ist.

Aufgabe der Erfindung ist es, eine Heuwerbungsmaschine, insbesondere eine Maschine zum Schwaden von landwirtschaftlichem Erntegut der vorstehend beschriebenen Art so auszubilden, daß durch eine exakte Abtastung der zu bearbeitenden Feld- und Wiesenfläche sowohl in als auch quer zur Fahrt- und Arbeitsrichtung eine optimale Arbeitsqualität und damit einhergehend eine hohe Flächenleistung der Heuwerbungsmaschine insbesondere bei Bodenwellen oder dgl. Bodenunebenheiten und einer hohen Arbeitsgeschwindigkeit erzielbar ist.

Zur Lösung der gestellten Aufgabe zeichnet sich die Heuwerbungsmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 10 verwiesen.

Durch die Anwendung der erfindungsgemäßen Merkmale wird eine Heuwerbungsmaschine, insbesondere eine Maschine zum Schwaden von landwirtschaftlichem Erntegut geschaffen, welche sich auch unter schwierigen Betriebsverhältnissen durch eine optimale Arbeitsqualität verbunden mit einer hohen Flächenleistung auszeichnet. Zur Erzielung dieser Leistungskriterien ist es erfindungsgemäß vorgesehen, bei einer Heuwerbungsmaschine mit zumindest einem, vorzugsweise jedoch mehreren (zwei oder vier) um eine vertikale Achse rotierend antreibbaren und um eine in und eine quer zur Fahrt- und Arbeitsrichtung schwenkbeweglich gehalterten Kreiselrechen jeden einzelnen Kreiselrechen mit einer Tastradanordnung zu versehen, welche aus einer vorderen Tastradbaugruppe und einer hinteren Tastradbaugruppe gebildet ist. Beide Tastradbaugruppen sind dabei über einen orts- und verdrehfest dem jeweiligen Kreiselrechen zugeordneten Tastradträger miteinander verbunden. Um nun eine exakte Abtastung von Bodenunebenheiten bzw. eine optimale Anpassung des Kreiselrechens an die Bodenoberfläche zu erreichen, ist es nach der Erfindung vorgesehen, die vordere Tastradbaugruppe innerhalb der Umlaufbahn der inneren Zinken des Kreiselrechens und nahe einem in Bezug zur Fahrt- und Arbeitsrichtung der Heuwerbungsmaschine vorderen Bogenabschnitt der Umlaufbahn der inneren Zinken anzuordnen, währenddessen die hintere Tastradbaugruppe einem bezüglich der Fahrt- und Arbeitsrichtung hinteren Bogenabschnitt der Umlaufbahn der inneren Zinken nachgeordnet ist. Das bedeutet, daß die gesamte hintere Tastradbaugruppe oder nur noch Teile davon, wie beispielsweise ein Trägerelement zur Verbindung der beiden Tastradelemente noch unter dem Umlaufbereich des Kreiselrechens angebracht ist, in dem sich die Zinken in einer Nicht-Rechstellung (hoch geschwenkte Stellung) befinden. Es ist aber auch denkbar, daß die gesamte hintere Tastradbaugruppe hinter dem Umlaufbereich des Kreiselrechens positioniert ist, in dem die Zinken in die Nicht-Rechstellung verschwenkt sind. Dadurch ergibt sich zum einen ein ausreichend großer Achsabstand zwischen der vorderen und der hinteren Tastbaugruppe und zum anderen die Möglichkeit die Spurbreite der aus zwei Tastradelementen gebildeten hinteren Tastradbaugruppe so groß auszubilden, daß sich die Fahrspur eines der Tastradelemente der hinteren Tastradbaugruppe unmittelbar neben bzw. nahe dem abgelegten Erntegutschwad erstreckt. Die Spurbreite der Tastradelemente der hinteren Tastradbaugruppe kann also eine Größenordnung annehmen, welche bei einer Anbringung der Tastradanordnung innerhalb der Umlaufbahn der inneren Zinken des Kreiselrechens überhaupt nicht erreichbar ist. Dadurch wird in vorteilhafter Art und Weise eine sowohl in als auch quer zur Fahrt- und Arbeitsrichtung gerichtete, optimale Abtastung bzw. Führung der Kreiselrechen während des Betriebes auf Feld- und Wiesenflächen jeglicher Art erreicht, ohne daß es zu Schlingerbewegungen des Kreiselrechens um die in Fahrt- und Arbeitsrichtung gerichtete oder um die quer zur Fahrt- und Arbeitsrichtung ausgerichtete Schwenkachse des Kreiselrechens kommt.

In vorteilhaften Ausgestaltungen der Erfindung ist es vorgesehen, daß die Tastradelemente der hinteren Tastradbaugruppe und die vordere Tastradbaugruppe symmetrisch zu einer vertikale und in Fahrt- und Arbeitsrichtung gerichteten Längsmittelebene der Kreiselrechens angebracht sind, so daß dadurch baugleiche Tastradanordnungen sowohl für einen Kreiselrechen mit Linksablage des Erntegutschwades als auch mit Rechtsablage verwendet werden können. Eine konstruktiv einfache und somit kostengünstige Ausführungsform geht dabei von einer, bei einer Betrachtung von oben dreieckförmig ausgebildeten Anordnung der Tastradelemente der hinteren Tastradbaugruppe und der vorderen Tastradbaugruppe zueinander aus, wobei als Einzel- oder Doppeltasträder ausgeführte Tastradelemente der hinteren und/oder vorderen Tastradbaugruppe um zumindest in etwa vertikale Achsen schwenkbar (Nachlaufräder) an einem vorzugsweise T-förmig ausgebildeten Tastradträger angebracht sind. Eine vorteilhafte Größenordnung liegt beispielsweise dann vor, wenn sich der in Fahrt- und Arbeitsrichtung meßbare Achsabstand zwischen der vorderen und der hinteren Tastradbaugruppe in etwa in einem Bereich befindet, der dem Durchmesser der Umlaufbahn der äußeren Zinken des/der Kreiselrechen, also dem Kreiseldurchmesser entspricht.

Eine detaillierte Beschreibung des Gegenstandes der Erfindung erfolgt nun anhand eines Ausführungsbeispieles. In der Zeichnung stellt im einzelnen dar:
- Fig.1: eine teilweise abgebrochen dargestellte Ansicht von oben auf einen erfindungsgemäßen Kreiselrechen einer Heuwerbungsmaschine;
- Fig.2: eine schematische Darstellung des Kreiselrechens gemäß Blickrichtung II in Fig.1;
- Fig.3: eine schematische Darstellung des Kreiselrechens aus einer der Fahrt- und Arbeitsrichtung entsprechenden Blickrichtung;

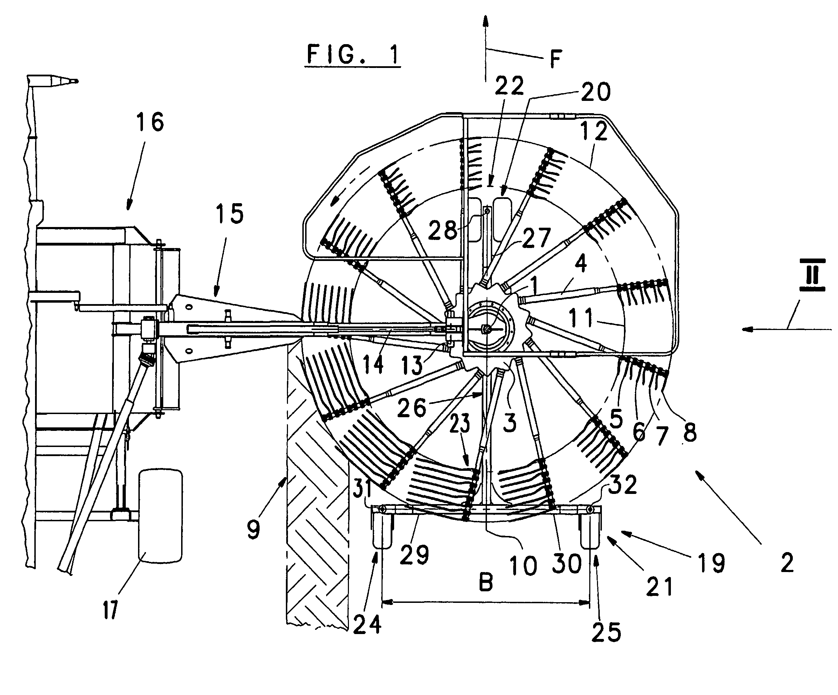

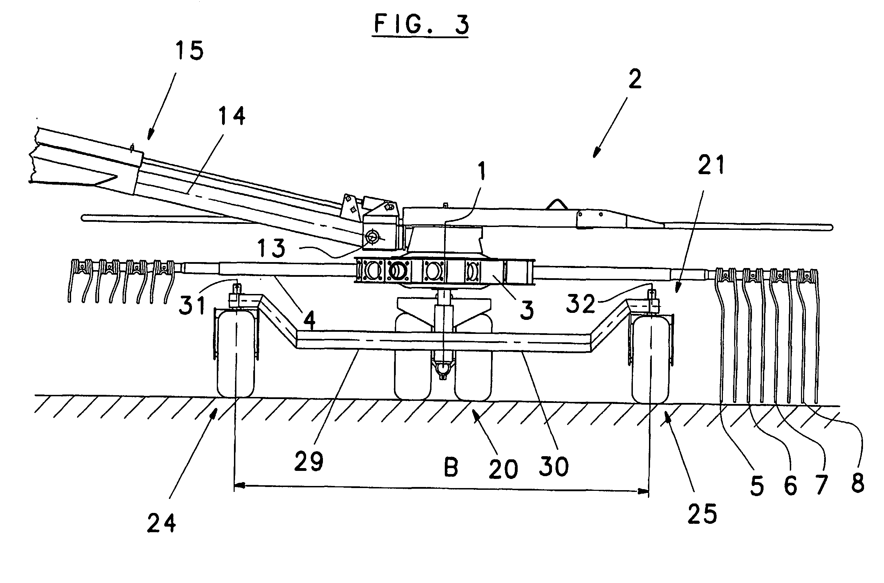

Eine der Erfindung zugrunde gelegte Heuwerbungsmaschine ist in den Fig.1 bis 3 näher veranschaulicht und umfaßt zumindest einen um eine in etwa senkrechte Achse 1 rotierend antreibbaren Kreiselrechen 2, welcher in der Mitte ein Kreiselgehäuse 3 aufweist, in dem Zinkenarme 4 gelagert sind, welche an ihren äußeren Enden mit Zinken 5,6,7,8 bestückt sind. In der dargestellten Arbeits- und Betriebsstellung wird der Kreiselrechen 2 mit einer gegen den Uhrzeigersinn gerichteten Drehrichtung angetrieben, so daß im Betrieb ein Erntegutschwad 9 abgelegt wird, welches sich, in Fahrt- und Arbeitsrichtung F gesehen, links von einer vertikalen und in Fahrt- und Arbeitsrichtung F gerichteten Längsmittelebene 10 des Kreiselrechens 2 befindet. Bei der Drehbewegung des Kreiselrechens 2 um die Achse 1 beschreiben die inneren Zinken 5 eine Umlaufbahn 11 und die äußeren Zinken 8 eine Umlaufbahn 12. Wie weiterhin insbesondere aus Fig. 1 und 3 hervorgeht, ist der Kreiselrechen 2 um eine in Fahrt- und Arbeitsrichtung F gerichtete Achse 13, sowie um eine weitere, zumindest in etwa horizontal und quer zur Fahrt- und Arbeitsrichtung F ausgerichtete Achse 14 schwenkbeweglich an eine Trag- und Antriebsanordnung 15 angelenkt und über diese mit einem Fahrgestell 16 verbunden, welches beispielsweise über Laufräder 17 gegenüber dem Erdboden abgestützt und mittels einer Anhängevorrichtung an eine nicht dargestellte Zug- und Antriebsmaschine, beispielsweise an einen landwirtschaftlichen Ackerschlepper anhängbar ist. Der Einfachheit halber ist in Fig.1 nur ein Kreiselrechen 2 dargestellt. Für den mit der Landtechnik vertrauten Durchschnittsfachmann es ist jedoch selbstverständlich, daß der Erfindung sowohl Heuwerbungsmaschinen mit nur einem Kreiselrechen als auch Heuwerbungsmaschinen mit mehreren, beispielsweise mit zwei oder vier Kreiselrechen zugrunde gelegt werden können.

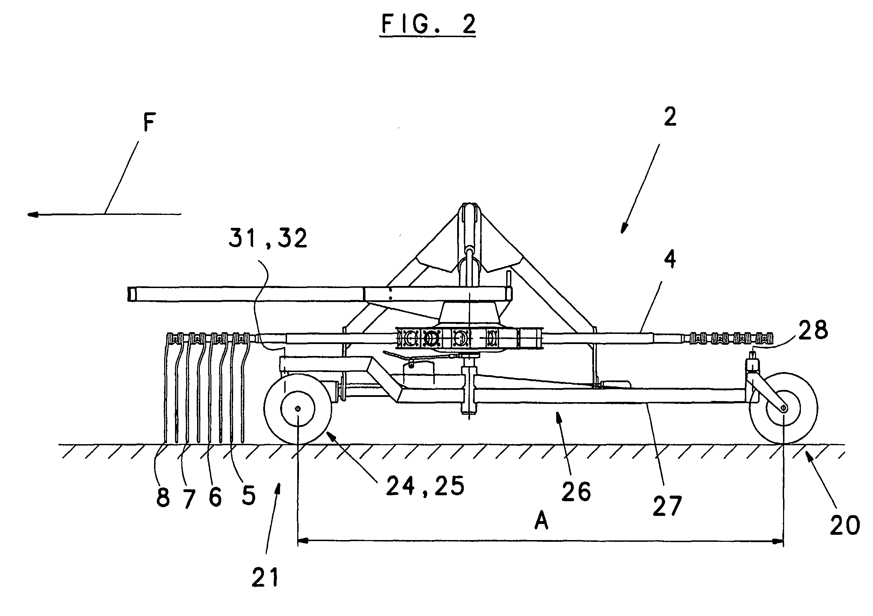

Zur Abstützung des Kreiselrechen 2 in der Arbeits- und Betriebstellung gegenüber dem Erdboden ist eine Tastradanordnung 19 vorgesehen, welche aus einer vorderen Tastradbaugruppe 20 und einer hinteren Tastradbaugruppe 21 gebildet ist. Erfindungsgemäß ist dabei die vordere Tastradbaugruppe 20 innerhalb der Umlaufbahn 11 der inneren Zinken 5 des Kreiselrechens 2 und bezüglich der Fahrt- und Arbeitsrichtung F nahe einem vorderen Bogenabschnitt 22 der Umlaufbahn 11 angeordnet, währenddessen die hintere Tastbaugruppe 21 einem bezüglich der Fahrt- und Arbeitsrichtung F hinteren Bogenabschnitt 23 nachgeordnet ist (Fig.1). Dadurch ergibt sich zwischen der vorderen Tastradbaugruppe 20 und der hinteren Tastradbaugruppe 21 ein in Fahrt- und Arbeitsrichtung F meßbarer Achsabstand A, dessen Größe zumindest in etwa einem Durchmesser der Umlaufbahn 12 des äußeren Zinkens 8, also damit in etwa dem Arbeitsdurchmesser des Kreiselrechens 2 entspricht (Fig.1 und 2). Weiterhin wird durch die vorstehend beschriebene Positionierung der hinteren Tastradbaugruppe 21 die Möglichkeit geschaffen, die Spurbreite B von zwei, die hintere Tastradbaugruppe 21 bildenden Tastradelementen 24,25 so groß auszuführen, daß die Fahrspur eines der Tastradelemente 24,25 sich nahe oder unmittelbar entlang des abgelegten Erntegutschwades 9 erstreckt (Fig.1). Aufgrund der dreieckförmigen Anordnung der vorderen Tastradbaugruppe 20 sowie der Tastradelemente 24,25 der hinteren Tastradbaugruppe 21 zueinander und dem großen Achsabstand A in Verbindung mit der großen Spurbreite B ergeben sich selbst bei hohen Arbeitsgeschwindigkeiten und unebenen Feld- und Wiesenflächen optimale Laufeigenschaften ohne Schlingerbewegungen des Kreiselrechens 2.

In einer konstruktiv einfachen Ausführungsform (Fig.1 und 2) der Tastradanordnung 19 ist es vorgesehen, unterhalb des Kreiselrechens 2 einen T-förmigen Tastradträger 26 anzuordnen, der verdrehfest mit der Trag- und Antriebsanordnung 15 des Kreiselrechens 2 verbunden ist. An einem längeren und in Fahrt- und Arbeitsrichtung F ausgerichteten Trägerabschnitt 27 des T-förmigen Tastradträgers 26 ist dabei die vordere Tastradbaugruppe 20 um eine zumindest in etwa vertikale Achse 28 schwenkbar angebracht, während die Tastradelemente 24,25 an den kürzeren und quer zum Trägerabschnitt 27 angeordneten Trägerabschnitten 29,30 des T-förmigen Tastradträgers 26 um ebenfalls zumindest annähernd vertikale Achsen 31,32 schwenkbar gehaltert sind. Die hintere Tastradbaugruppe 21 umfaßt also die Tastradelemente 24,25 mit den diese miteinander verbindenden Trägerabschnitten 29,30. Abhängig von konstruktiven Erfordernissen können selbstverständlich sowohl die vordere Tastradbaugruppe 20 als auch die Tastradelemente 24,25 der hinteren Tastradbaugruppe 21 als Einzel- und/oder Doppeltasträder ausgeführt sein.

## Patentansprüche

1. Heuwerbungsmaschine, insbesondere Maschine zum Schwaden von landwirtschaftlichem Erntegut mit zumindest einem um eine in etwa senkrechte Achse (1) rotierend antreibaren und mit Zinken (5,6,7,8) bestückte Zinkenarme (4) aufweisenden Kreiselrechen (2), welcher/welche um eine in Fahrt- und Arbeitrichtung (F) gerichtete Achse (13) sowie um eine weitere, zumindest in etwa horizontal und quer zur Fahrt- und Arbeitsrichtung (F) ausgerichtete Achse (14) schwenkbeweglich an einem Tragrahmen oder an schwenkbaren Tragarmen eines Trag- und/oder Fahrgestelles gehaltert und mittels einer Tastradanordnung in der Arbeits- und Betriebsstellung gegenüber dem Erdboden abgestützt ist/sind, wobei, jedem Kreiselrechen (2) eine, aus einer vorderen Tastradbaugruppe (20) und einer hinteren Tastradbaugruppe (21) bestehenden Tastradanordnung (19) zugeordnet ist, wobei die vordere Tastradbaugruppe (20) innerhalb der Umlaufbahn (11) und nahe einem bezüglich der Fahrt- und Arbeitsrichtung (F) vorderen Bogenabschnitt (22) der Umlaufbahn (11) der inneren Zinken (5) angebracht ist **dadurch gekennzeichnet, daß** die hintere Tastradbaugruppe (21) einem bezüglich der Fahrt- und Arbeitsrichtung (F) hinteren Bogenabschnitt (23) der Umlaufbahn (11) der inneren Zinken (5) nachgeordnet und aus Tastradelementen (24,25) gebildet ist, deren Spurbreite (B) so gewählt ist, daß die Fahrspur eines der Tastradelemente (24,25) der hinteren Tastradbaugruppe (21) nahe entlang einem abgelegten Erntegutschwad führt.

2. Heuwerbungsmaschine nach Anspruch 1, **dadurch gekennzeichnet, daß** die Spurbreite (B) der Tastradelemente (24,25) der hinteren Tastradbaugruppe (21) so ausgeführt ist, daß die Fahrspur des dem Erntegutschwades zugewandten Tastradelementes (24 oder 25) bei Links- oder Rechtsablage sich unmittelbar neben dem Erntegutschwad erstreckt.

3. Heuwerbungsmaschine nach Anspruch 1 und 2, **dadurch gekennzeichnet, daß** die Tastradelemente (24,25) der hinteren Tastradbaugruppe (21) und die vordere Tastradbaugruppe (20) symmetrisch zu einer vertikalen und in Fahrt- und Arbeitsrichtung (F) gerichteten Längsmittelebene (10) des/der Kreiselrechen (2) angeordnet sind.

4. Heuwerbungsmaschine nach einem der Ansprüche 1 bis 3, **dadurch gekennzeichnet, daß** die Tastradelemente (24,25) der hinteren Tastradbaugruppe (21) und die vordere Tastradbaugruppe (20) eine dreieckförmige Anordnung zueinander aufweisen.

5. Heuwerbungsmaschine nach einem der Ansprüche 1 bis 4, **dadurch gekennzeichnet, daß** die Tastradelemente (24,25) der hinteren Tastradbaugruppe (21) um zumindest in etwa vertikale Achsen (31,32) schwenkbeweglich an den Enden der kürzeren Trägerabschnitte (29,30) eines T-förmigen Tastradträgers (26) angelenkt sind.

6. Heuwerbungsmaschine nach einem der Ansprüche 1 bis 5, **dadurch gekennzeichnet, daß** die vordere Tastradbaugruppe (20) am Ende des längeren Trägerabschnittes (27) des T-förmigen Tastradträgers (26) um eine zumindest in etwa vertikale Achse (28) schwenkbar gelagert ist.

7. Heuwerbungsmaschine nach einem der Ansprüche 1 bis 6, **dadurch gekennzeichnet, daß** die Tastradelemente (24,25) der hinteren Tastradbaugruppe als Einzel- oder Doppeltasträder ausgeführt werden können.

8. Heuwerbungsmaschine nach einem der Ansprüche 1 bis 7, **dadurch gekennzeichnet, daß** die vordere Tastradbaugruppe (20) als Einzel- oder Doppeltastrad ausgebildet werden kann.

9. Heuwerbungsmaschine nach einem der Ansprüche 1 bis 8, **dadurch gekennzeichnet, daß** der in Fahrt- und Arbeitsrichtung (F) meßbare Achsabstand (A) zwischen der vorderen Tastradbaugruppe (20) und der hinteren Tastradbaugruppe (21) zumindest in etwa dem Durchmesser der Umlaufbahn (12) der äußeren Zinken (8) des/der Kreiselrechen (2) entspricht.

## Claims

1. Haymaking machine, in particular a machine for windrowing harvested agricultural crops having at least one rotary rake (2) which can be driven in rotation about an approximately vertical axis (1), which has tine arms (4) fitted with tines (5,6,7,8), and which is mounted on a supporting frame or on pivotable supporting arms of a supporting and/or transporting chassis in such a way as to be movable by pivoting about an axis (13) directed in a direction (F) of travel and operation and about a further axis (14) which is directed at least approximately horizontally and transversely to the direction (F) of travel and operation, which rotary rake (2) is supported in the working and operating position relative to the ground by means of a sensing wheel arrangement, each rotary rake (2) having associated with it a sensing wheel arrangement (19) comprising a front sensing wheel assembly (20) and a rear sensing wheel assembly (21)and the front sensing wheel assembly (20) being mounted within the orbital path (11) followed by the inner tines (5) and close to an arcuate portion (22) of the said orbital path (11), which arcuate portion (22) is at the front in relation to the direction (F) of travel and operation, **characterised in that** the rear sensing wheel assembly (21) is arranged downstream of an arcuate portion (23) of the orbital path (11) followed by the inner tines (5), which arcuate portion (23) is at the rear in relation to the direction (F) of travel and operation, which rear sensing wheel assembly (21) is formed by sensing wheel members (24,25) whose track (B) is selected to be such that the path along which one of the sensing wheel members (24,25) of the rear sensing wheel assembly (21) travels passes along and close to a windrow of harvested crop that has been deposited.

2. Haymaking machine according to claim 1, **characterised in that** the track (B) of the sensing wheel members (24,25) of the rear sensing wheel assembly (21) is such that, when the deposit is to the left or right, the path followed by the sensing wheel member (24 or 25) adjacent the windrow of harvested material extends immediately adjacent to the windrow of harvested crop.

3. Haymaking machine according to claims 1 and 2, **characterised in that** the front sensing wheel assembly (20) and the sensing wheel members (24,25) of the rear sensing wheel assembly (21) are symmetrically arranged relative to a vertical longitudinal centre plane (10) of the rotary rake or rakes (2) which is directed in the direction (F) of travel and operation.

4. Haymaking machine according to one of claims 1 to 3, **characterised in that** the front sensing wheel assembly (20) and the sensing wheel members (24,25) of the rear sensing wheel assembly (21) are in a triangular arrangement relative to one another.

5. Haymaking machine according to one of claims 1 to 4, **characterised in that** the sensing wheel members (24,25) of the rear sensing wheel assembly (21) are hinged to the ends of the shorter carrier portions (29,30) of a T-shaped sensing wheel carrier (26) to be movable in pivoting about at least approximately vertical axes (31, 32).

6. Haymaking machine according to one of claims 1 to 5, **characterised in that** the front sensing wheel assembly (20) is mounted on the end of the longer carrier portion (27) of the T-shaped sensing wheel carrier (26) to be pivotable about an at least approximately vertical axis (28).

7. Haymaking machine according to one of claims 1 to 6, **characterised in that** the sensing wheel members (24,25) of the rear sensing wheel assembly (21) may be produced in the form of single or double sensing wheels.

8. Haymaking machine according to one of claims 1 to 7, **characterised in that** front sensing wheel assembly (20) may take the form of a single or double sensing wheel.

9. Haymaking machine according to one of claims 1 to 8, **characterised in that** the wheelbase (A), measurable in the direction (F) of travel and operation, between the front sensing wheel assembly (20) and the rear sensing wheel assembly (21) corresponds at least approximately to the diameter of the orbital path (12) followed by the outer tines (8) of the rotary rake or rakes (2).

## Revendications

1. Machine de fenaison notamment andaineuse de produits agricoles comportant au moins une roue racleuse (2) entraînée en rotation autour d'un axe (1) sensiblement vertical et comportant des bras (4) portant des dents (5, 6, 7, 8),
cette (ou ces) roue(s) étant tenue(s) sur un bras de support ou des bras de support d'un châssis de support et/ou de sustentation, en pouvant pivoter autour d'un axe (13) dirigé dans la direction de déplacement et de travail (F) ainsi qu'autour d'un autre axe (14) dirigé au moins dans la direction horizontale et transversalement à la direction de déplacement et travail (F) et soutenue(s) par l'intermédiaire d'un dispositif à roues de jauge en position de travail et de fonctionnement par rapport au sol, avec associé à chaque roue racleuse (2) un dispositif de roues de jauge (19) composé d'un groupe de roues de jauge avant (20) et d'un groupe de roues de jauge arrière (21),
le groupe de roues de jauge avant (20) étant situé à l'intérieur de la trajectoire de circulation (11) et à proximité du segment d'arc (22) avant selon la direction de déplacement et de travail (F) de la trajectoire (11) des dents intérieures (5),
**caractérisée en ce que**
le groupe de roues de jauge arrière (21) est monté en aval d'un segment d'arc (23) de la trajectoire de circulation (11) par rapport à la direction de déplacement et de travail (F) des dents intérieures (5), et il est formé par des éléments de roues de jauge (24, 25) dont la largeur de voie (B) est choisie pour que la trace de l'un des éléments de roues de jauge (24, 25) du groupe arrière de roues de jauge (21) passe à proximité et le long de l'andain déposé.

2. Machine de fenaison selon la revendication 1,
**caractérisée en ce que**
la largeur de voie (B) des éléments de roues de jauge (24, 25) du groupe de roues de jauge arrière (21) est choisie pour que la largeur de voie de l'élément de roues de jauge (24 ou 25) associé à l'andain (dans le cas d'un dépôt à gauche ou d'un dépôt à droite) passe directement à côté de l'andain.

3. Machine de fenaison selon l'une quelconque des revendications 1 et 2,
**caractérisée en ce que**
les éléments de roues de jauge (24, 25) du groupe arrière de roues de jauge (21) et du groupe avant de roues de jauge (20) sont disposés symétriquement par rapport à un plan médian longitudinal (10) dirigé symétriquement par rapport à la direction verticale et à la direction de déplacement et de travail (F) de la roue racleuse (2).

4. Machine de fenaison selon l'une quelconque des revendications 1 à 3,
**caractérisée en ce que**
les éléments de roues de jauge (24, 25) du groupe arrière de roues de jauge (21) et du groupe avant de roues de jauge (20), ont une disposition en triangle.

5. Machine de fenaison selon l'une quelconque des revendications 1 à 4,
**caractérisée en ce que**
les éléments de roues de jauge (24, 25) du groupe arrière de roues de jauge (21) sont articulés au moins de manière pivotante suivant des axes sensiblement verticaux (31, 32) à l'extrémité des segments de supports (29, 30) les plus courts d'un support de roues de jauge (26) en forme de (T).

6. Machine de fenaison selon l'une quelconque des revendications 1 à 5,
**caractérisée en ce que**
le groupe avant de roues de jauge (20) est prévu à l'extrémité du segment le plus long de support (27) du support de roues de jauge (26) en forme de (T), en étant monté pivotant autour d'un axe (28) au moins sensiblement vertical.

7. Machine de fenaison selon l'une quelconque des revendications
1 à 6,
**caractérisée en ce que**
les éléments de roues de jauge (24, 25) de l'ensemble arrière de roues de jauge sont réalisés sous la forme de roues simples ou de roues jumelées.

8. Machine de fenaison selon l'une quelconque des revendications 1 à 7,
**caractérisée en ce que**
le groupe avant de roues de jauge (20) est réalisé sous la forme d'une roue de jauge simple ou d'une roue de jauge double.

9. Machine de fenaison selon l'une quelconque des revendications 1 à 8,
**caractérisée en ce que**
l'entr'axe (A) mesuré dans la direction de déplacement et de travail (F) entre le groupe avant de roues de jauge (20) et le groupe arrière de roues de jauge (21) correspond au moins sensiblement au diamètre de la trajectoire de circulation (12) des dents extérieures (8) du ou des roues racleuses (2).
